# EUROPEAN PATENT SPECIFICATION

(11) **EP 1 820 824 B1**
(45) Date of publication and mention of the grant of the patent: **13.08.2008**
(21) Application number: 07003125.7
(22) Date of filing: 14.02.2007
(51) Int. Cl.: C08L 83/04, G02B 1/04

(54) **Heat curable silicone composition**
Hitzeerhärtbare Silikonzusammensetzung
Composition de silicone durcissable thermiquement

(30) Priority: 20.02.2006 JP 2006041927
(43) Date of publication of application: 22.08.2007
(73) Proprietor: Shin-Etsu Chemical Co., Ltd., Tokyo (JP)
(72) Inventor: Yamakawa, Naoki c/oSilicone Materials Res. Center, Matsuida-machi Annaka-shi Gunma-ken (JP)
(74) Representative: TER MEER - STEINMEISTER & PARTNER GbR

(56) References cited:
- EP-A- 1 749 861
- EP-A- 1 767 580
- EP-A1- 1 424 363
- WO-A-20/05062080
- US-A1- 2005 061 437

## Description

### TECHNICAL FIELD

This invention relates to heat curable silicone compositions capable of forming cured products which have a high hardness and high transparency, do not turn white turbid even when held in a hot humid atmosphere, and are thus suitable as optical members such as light emitting diode (LED) encapsulants and optical lens materials.

### BACKGROUND ART

Silicone resins are well known to have excellent properties including heat resistance, freeze resistance, electric insulation, weatherability, water repellency and transparency. They are used in a variety of fields including electric and electronic equipment, business machines, automobiles, precision instruments, building materials, and the like.

Because of easy working, light weight, low cost, and impact resistance, transparent organic materials are currently expected in the field of optical lenses and the like as a substitute for inorganic glass materials.

While the technology has progressed in reducing the size of optical parts and increasing the intensity of light sources, organic resin materials are exposed to higher temperature and higher luminous intensity. There exists a demand to have transparent organic resin materials having better heat resistance and light resistance. In this regard, silicone resins are superior to other organic resin materials in that silicone resins not only have good heat resistance and transparency, but are also less susceptible to discoloration and physical degradation. The use of silicone resins as optical member material is expected.

Of the silicone resins, the addition reaction curing silicone resin composition of Japanese Patent No. 3344286 has the advantages that it is easy to mold as compared with condensation curing silicone varnish of the solvent type and is environment friendly because of substantial absence of solvent. This silicone resin composition cures into a high hardness/high transparency resin and is easy to mold, finding an additional use as a key-top forming composition. Based on the finding that an increase in the crosslinking density of siloxane and the π-π interaction between aromatic rings are important for enhancing the strength, especially flexural strength, and the hardness of a cured product, JP-A 2002-265787 corresponding to USP 6,815,520 discloses a silicone resin composition comprising a specific organopolysiloxane having phenyl and alkenyl groups and a specific organohydrogenpolysiloxane having a phenyl group, which undergo addition curing into a high hardness/high transparency resin.

Although these high hardness/high transparency silicone resins have good heat resistance and light resistance, they were found to suffer from a problem that the resins turn white turbid or cloudy when they are allowed to stand for a certain time in a hot humid atmosphere, typically of 85°C/85% RH and then restored to room temperature, as often employed in tests for evaluating materials for electric appliances or the like. It is known that by heating again the resin in an oven at 100°C for about 30 minutes, the white turbidity is offset, that is, the resin resumes the colorless transparent state. Nevertheless, there is a demand for a high hardness/high transparency silicone resin which does not turn white turbid upon restoration of room temperature from a hot humid standing, that is, having transparency without temperature dependency and thermal hysteresis dependency.

### DISCLOSURE OF THE INVENTION

An object of the invention is to provide a heat curable silicone composition capable of forming a cured product which has a high hardness, transparency, heat resistance, and light resistance, and does not turn white turbid upon restoration of room temperature from a hot humid standing.

Regarding an addition reaction curing silicone composition comprising an alkenyl group-containing organopolysiloxane, an organohydrogenpolysiloxane, and a curing catalyst, the inventor has found that by using an alkenyl group-containing organopolysiloxane having a high phenyl content and a high hydroxyl content, preferably an alkenyl group-containing organopolysiloxane having a high phenyl content and a high hydroxyl content wherein some or all of D units are those in which at least one of two monovalent hydrocarbon groups is an alkenyl or phenyl group, as the alkenyl group-containing organopolysiloxane of branched and/or three-dimensional network structure, and combining it with an epoxy and/or alkoxy group-containing organohydrogenpolysiloxane, an epoxy and/or alkoxy group-containing organosilane, or a non-siliceous epoxy compound, there is obtained a composition that cures into a silicone resin which has a high hardness, transparency, heat resistance, and light resistance, and which does not turn white turbid upon restoration of room temperature from a hot humid standing, typically in a 85°C/85% RH atmosphere.

The present invention provides a heat curable silicone composition comprising
(A) an organopolysiloxane containing 0.5 to 10% by weight of hydroxyl groups, represented by the average compositional formula (1):

   R¹ₙ(C₆H₅)ₘSiO₍₄₋ₙ₋ₘ)_{/2} (1)

   wherein R¹ is each independently a substituted or unsubstituted monovalent hydrocarbon group (excluding phenyl), alkoxy group or hydroxyl group, 30 to 90 mol% of entire R¹ being alkenyl groups, n and m are positive numbers in the range: 1 ≤ n+m < 2 and 0.20 ≤ m/(n+m) ≤ 0.95,
(B) an organohydrogenpolysiloxane containing at least two silicon-bonded hydrogen atoms per molecule, represented by the average compositional formula (2):

   R²ₐH_{b}SiO_{(4-a-b)/2} (2)

   wherein R² is each independently a substituted (excluding epoxy and alkoxy substitution) or unsubstituted monovalent hydrocarbon group free of aliphatic unsaturation, and "a" and "b" are positive numbers in the range: 0.7 ≤ a ≤ 2.1, 0.01 ≤ b ≤ 1.0, and 0.8 ≤ a+b ≤ 3.0, in such an amount that a molar ratio of the total of silicon-bonded hydrogen atoms in components (B) and (D) to the total of silicon-bonded alkenyl groups in the composition is between 0.5 and 4.0,
(C) a catalytic amount of an addition reaction catalyst, and
(D) 0.01 to 30 parts by weight per 100 parts by weight of components (A) and (B) combined of at least one compound selected from epoxy and/or alkoxy group-containing organohydrogenpolysiloxanes, epoxy and/or alkoxy group-containing organosilanes, and non-siliceous epoxy compounds.

In a preferred embodiment, component (A) is obtained through hydrolytic condensation of at least one silane compound having a hydrolyzable group and contains D units of the formula: R³₂SiO_{2/2} wherein R³ is a substituted or unsubstituted monovalent hydrocarbon group, and in some or all D units, at least one of the two R³ is an alkenyl group.

In a preferred embodiment, the composition cures at 150°C for 1 hour into a product having a hardness of at least 60 in Shore D Durometer unit. In a preferred embodiment, the composition in the cured state has a transmittance of at least 85% for 450 nm linear light. In a preferred embodiment, after a cured product thereof is held for a time in a 85°C/85% RH atmosphere, the cured product has an outer appearance free of white turbidity and keeps a transmittance of 450 nm linear light at a level equal to or greater than 90% of the initial.

Typically the composition is used as light emitting diode encapsulants or optical lenses.

### BENEFITS OF THE INVENTION

The heat curable silicone compositions of the invention cure into products which have a high hardness and high transparency as well as good heat resistance and light resistance, and do not turn white turbid upon restoration of room temperature from a hot humid standing. The compositions are thus suitable as optical member-forming materials such as light emitting diode (LED) encapsulants and optical lens materials.

### DESCRIPTION OF THE PREFERRED EMBODIMENT

### Component A

Component (A) in the heat curable silicone composition of the invention is an organopolysiloxane containing 0.5 to 10% by weight of hydroxyl groups, represented by the average compositional formula (1).

R¹ₙ(C₆H₅)ₘSiO_{(4-n-m)/2} (1)

Herein R¹ is each independently a substituted or unsubstituted monovalent hydrocarbon group (excluding phenyl), alkoxy group or hydroxyl group, 30 to 90 mol%, preferably 30 to 80 mol%, more preferably 40 to 60 mol% of entire R¹ being alkenyl groups. The subscripts n and m are positive numbers in the range: 1 ≤ n+m < 2 and 0.20 ≤ m/(n+m) ≤ 0.95, preferably 1.1 ≤ n+m ≤ 1.9 and 0.30 ≤ m/(n+m) ≤ 0.90, more preferably 1.25 ≤ n+m ≤ 1.75 and 0.40 ≤ m/(n+m) ≤ 0.70.

As understood from average compositional formula (1) wherein 1 ≤ n+m < 2, this organopolysiloxane is of a branched or three-dimensional network structure comprising at least one type of R¹SiO_{3/2} units, (C₆H₅) SiO_{3/2} units, and SiO_{4/2} units in the molecule. The subscripts n and m should satisfy the range: 0.20 ≤ m/(n+m) ≤ 0.95, whereas organopolysiloxanes with n and m outside the range are low in strength and brittle, failing to attain the objects of the invention.

The organopolysiloxane may be solid or liquid although it is preferred for cast molding and injection molding that the organopolysiloxane is such that a composition thereof having components (B) to (D) added thereto may become a liquid having a viscosity of about 1,000 mPa-s to about 10,000 Pa-s (i.e., 10,000,000 mPa-s) at the maximum.

The substituted or unsubstituted monovalent hydrocarbon groups represented by R¹ include those of 1 to about 12 carbon atoms, preferably 1 to about 9 carbon atoms, for example, alkyl groups such as methyl, ethyl, propyl, isopropyl, butyl, isobutyl, tert-butyl, pentyl,neopentyl, hexyl, cyclohexyl, octyl, nonyl, and decyl; aryl groups such as tolyl, xylyl, and naphthyl; aralkyl groups such as benzyl, phenylethyl, and phenylpropyl; and alkenyl groups such as vinyl, allyl, propenyl, isopropenyl, butenyl, hexenyl, cyclohexenyl, and octenyl. At least one, preferably two or more of entire R¹ are alkenyl groups, and specifically 30 to 90 mol%, preferably 30 to 80 mol%, more preferably 40 to 60 mol% of entire R¹ are alkenyl groups. The content of alkenyl groups of component (A) is preferably 0.01 to 1.0 mol/100 g, more preferably 0.1 to 0.5 mol/100 g in one molecule. The preferred alkenyl groups are vinyl and allyl, with vinyl being most preferred.

The alkoxy groups represented by R¹ include those of 1 to 6 carbon atoms, preferably 1 to 4 carbon atoms, for example, methoxy, ethoxy, propoxy, isopropoxy, butoxy, isobutoxy, and tert-butoxy.

Also included in R¹ are hydroxyl groups which are formed during hydrolytic reaction. The content of hydroxyl groups is preferably 0.5 to 10% by weight, more preferably 1 to 8% by weight, and even more preferably 2 to 6% by weight of the organopolysiloxane (A). If the hydroxyl content is too low, the cured product has so scanty hydrophilic portions that after a hot humid standing, water absorbed thereby gathers at scanty hydrophilic portions in the cured product for thereby turning the cured product white turbid. Inversely, if the hydroxyl content is too high, hydroxyl groups can react with each other upon heat curing so that dehydrating reaction occurs, with the risk of foaming or water of condensation being left in the cured product. The hydroxyl content in component (A) can be controlled to the desired range by effecting hydrolysis of organosilanes at low temperature and by effecting subsequent (poly)condensation reaction under acidic or neutral conditions and avoiding (poly)condensation reaction under alkaline conditions.

The organopolysiloxane of branched or three-dimensional network structure having formula (1) is a highly viscous liquid at room temperature (25°C). Most often, it preferably has a number average molecular weight (Mn) of about 1,500 to about 20,000, as measured by gel permeation chromatography (GPC) versus polystyrene standards. If Mn is outside the range, an organopolysiloxane composition having components (B) to (D) added thereto may have too high or low a viscosity to handle and work with.

The organopolysiloxane of formula (1) is obtainable through hydrolysis of one or more organosilanes having hydrolyzable groups (e.g., halogen atoms and alkoxy groups). Hydrolysis may be carried out by a standard technique in the presence of acid or alkali catalysts. Desirably hydrolysis is carried out in the presence of an acid catalyst or in the absence of any catalyst, because (poly)condensation reaction following the hydrolysis should be carried out under acidic or neutral conditions. Suitable organosilanes subject to hydrolysis include those of the structure R¹¹R¹²SiX₂ and R¹³SiX₃. Herein X is a hydrolyzable group such as halogen atoms (e.g., chlorine), alkoxy groups or the like. R¹¹, R¹² and R¹³ are substituted or unsubstituted monovalent hydrocarbon groups, specifically of 1 to about 12 carbon atoms, preferably 1 to about 9 carbon atoms, for example, alkyl groups such as methyl, ethyl, propyl, isopropyl, butyl, isobutyl, tert-butyl, pentyl, neopentyl, hexyl, cyclohexyl, octyl, nonyl, and decyl; aryl groups such as phenyl, tolyl, xylyl, and naphthyl; aralkyl groups such as benzyl, phenylethyl, and phenylpropyl; and alkenyl groups such as vinyl, allyl, propenyl, isopropenyl, butenyl, hexenyl, cyclohexenyl, and octenyl.

R¹¹, R¹² and R¹³ contain 20 to 95 mol%, preferably 30 to 90 mol%, and more preferably 40 to 70 mol% of phenyl groups. If the phenyl content is too high, a high refractive index material is available, but component (A) may have too high a viscosity to handle. If the phenyl content is too low, a high refractive index material may not be available or the desired strength may not be achievable.

R¹¹, R¹² and R¹³ contain 1.5 to 80 mol%, preferably 2.5 to 70 mol%, and more preferably 5 to 60 mol% of alkenyl groups. If the alkenyl content in entire component (A) is too high, the organohydrogenpolysiloxane must be added in such increased amounts that the finished viscosity may become too low. If the amount of organohydrogenpolysiloxane is not increased, then the proportion of alkenyl groups in the composition extremely exceeds the moles of silicon-bonded hydrogen atoms, which can adversely affect the heat resistance of the cured product and cause discoloration. If the alkenyl content in entire component (A) is too low, component (A) may have too high a viscosity to handle.

Of the entire constituent units of the organopolysiloxane having average compositional formula (1) serving as component (A), it is desired that D units of the formula [R³₂SiO_{2/2}] wherein R³ is a substituted or unsubstituted monovalent hydrocarbon group derived from R¹¹ and R¹² account for 0 to 65 mol%, preferably 10 to 60 mol%, and more preferably 25 to 55 mol% based on the charges for hydrolysis. It is understood that two R³ groups are present per D unit of [R³₂SiO_{2/2}]. It is desired that those D units wherein at least one (i.e., one or two) of the two R³ is an alkenyl group account for at least 50 mol% (50 to 100 mol%), especially at least 70 mol% (70 to 100 mol%) of the entire D units in component (A). On the other hand, those D units wherein the two R³ are monovalent hydrocarbon groups other than alkenyl groups (e.g., alkyl groups) desirably account for up to 20 mol% (0 to 20 mol%), more desirably up to 15 mol% (0 to 15 mol%), most desirably 0 mol%, based on the charges for hydrolysis. Differently stated, difunctional hydrolyzable silanes R¹¹R¹²SiX₂ are desirably those in which either one or both of R¹¹ and R¹² corresponding to R³ are alkenyl groups. In case where neither of R¹¹ and R¹² are alkenyl groups (for example, in the case of hydrolyzable dialkylsilanes), as opposed to the fact that the strength of the cured product is increased if the D units of [R³₂SiO_{2/2}] are incorporated as a spacer, the difunctional silane R¹¹R¹²SiX₂ is hardly incorporated in the resin during hydrolysis, causing the resin to have more residual chlorine.

Also, of the entire constituent units of the organopolysiloxane having average compositional formula (1) serving as component (A), it is desired that T units of the formula [R⁴SiO_{3/2}] wherein R⁴ is a substituted or unsubstituted monovalent hydrocarbon group derived from R¹³ account for 30 to 100 mol%, preferably 40 to 75 mol%, and more preferably 45 to 70 mol% based on the charges for hydrolysis. R⁴ is desirably a phenyl or alkenyl group, with phenyl being most desired.

### Component B

Component (B) is an organohydrogenpolysiloxane containing at least two silicon-bonded hydrogen atoms (i.e., SiH groups) per molecule, represented by the average compositional formula (2).

R²ₐH_{b}SiO_{(4-a-b)/2} (2)

Herein R² is each independently a substituted (excluding epoxy and alkoxy substitution) or unsubstituted monovalent hydrocarbon group free of aliphatic unsaturation, and "a" and "b" are positive numbers in the range: 0.7 ≤ a ≤ 2.1, 0.01 ≤ b ≤ 1.0, and 0.8 ≤ a+b ≤ 3.0, and preferably 1 ≤ a ≤ 2, 0.02 ≤ b ≤ 1.0, and 2 ≤ a+b ≤ 2.7. The organohydrogenpolysiloxane contains at least two (specifically 2 to 100) SiH groups, preferably at least three (specifically 3 to 100) SiH groups per molecule. The SiH content is preferably in a range of 0.001 to 0.02 mol/g, and more preferably 0.005 to 0.017 mol/g. The organohydrogenpolysiloxane (B) has a molecular structure which may be either linear, cyclic, branched and/or three-dimensional network although the linear, cyclic and (partially) branched structures are preferred.

The organohydrogenpolysiloxane (B) serves as a crosslinker for causing crosslinkage through hydrosilylating reaction with alkenyl groups in component (A) and also as a reactive diluent for diluting the composition to an appropriate viscosity for a particular application.

The monovalent groups represented by R² are substituted or unsubstituted monovalent hydrocarbon groups defined above, for example, alkyl, aryl and alkenyl groups having 1 to 12 carbon atoms, especially 1 to 8 carbon atoms, and should be free of aliphatic unsaturation, with methyl and phenyl being more preferred.

It is preferred in the practice of the invention that component (B) have a refractive index close to that of component (A). In this regard, it is preferred that at least 30 mol% of entire R² in the organohydrogenpolysiloxane (B) be methyl, and it is more preferred that additionally, at least 5 mol%, even more preferably 20 to 50 mol% of entire R² be phenyl. If components (A) and (B) have different refractive indexes, a mixture thereof may become white turbid, failing to provide a transparent composition.

The organohydrogenpolysiloxane (B) should preferably have a viscosity at 25°C of equal to or less than 1,000 mPa-s (specifically 1 to 1,000 mPa-s), more preferably 5 to 200 mPa-s, as measured by a rotational viscometer. Often the number of silicon atoms per molecule is about 2 to about 300, preferably about 3 to about 200, and more preferably about 4 to about 100.

Examples of the organohydrogenpolysiloxane include 1,1,3,3-tetramethyldisiloxane, 1,3,5,7-tetramethylcyclotetrasiloxane, tris(dimethylhydrogensiloxy)methylsilane, tris(dimethylhydrogensiloxy)phenylsilane, methylhydrogencyclopolysiloxane, methylhydrogensiloxane-dimethylsiloxane cyclic copolymers, trimethylsiloxy end-capped methylhydrogenpolysiloxane, trimethylsiloxy end-capped dimethylsiloxanemethylhydrogensiloxane copolymers, dimethylhydrogensiloxy end-capped dimethylpolysiloxane, dimethylhydrogensiloxy end-capped dimethylsiloxanemethylhydrogensiloxane copolymers, trimethylsiloxy end-capped methylhydrogensiloxanediphenylsiloxane copolymers, combinations of trimethylsiloxy end-capped methylhydrogensiloxane with dimethylhydrogensiloxy end-capped methylhydrogensiloxane, and modified forms of the foregoing in which some or all methyl groups are substituted by other alkyl groups (e.g., ethyl or propyl) or haloalkyl groups (e.g., 3,3,3-trifluoropropyl). As used herein, the term "end-capped" means that a polymer is capped with the indicated groups at both ends of its molecular chain, unless otherwise stated. Also included are those of the following general formulas (3) and (4): 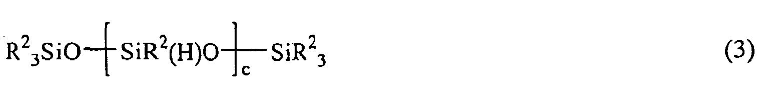 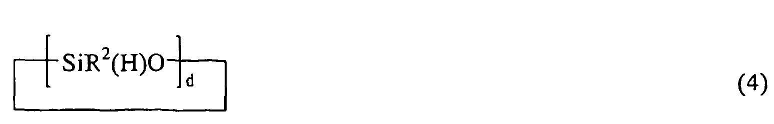 wherein R² is as defined above, c is an integer of 2 to 25, preferably 2 to 20, and d is an integer of 4 to 8, and those of the following general formulas: 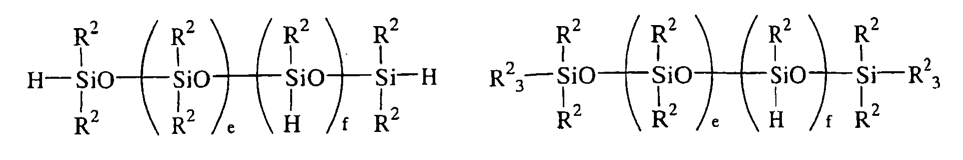 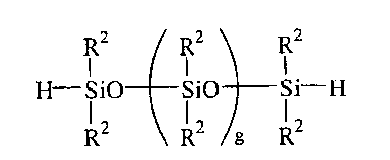 wherein R² is as defined above, e is an integer of 5 to 40, f is an integer of 5 to 20, and g is an integer of 2 to 30.

One specific example of component (B) is of the following structural formula although component (B) is not limited thereto as a matter of course.

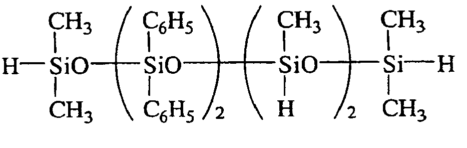

Component (B) is compounded in such an amount that the total of silicon-bonded hydrogen atoms in component (B) and silicon-bonded hydrogen atoms in component (D) to be described later and the total of silicon-bonded alkenyl groups in the composition, specifically silicon-bonded alkenyl groups in component (A) are preferably in a molar ratio between 0.5:1 and 4.0:1, more preferably between 0.7:1 and 1.5:1, and most preferably between 0.7:1 and 1.2:1. In the event component (D) is free of silicon-bonded hydrogen atoms, component (B) is compounded in such an amount that silicon-bonded hydrogen atoms in component (B) and the total of silicon-bonded alkenyl groups in the composition, specifically silicon-bonded alkenyl groups in component (A) are preferably in a molar ratio between 0.5 and 4.0, more preferably between 0.7 and 1.5, and most preferably between 0.7 and 1.2.

If the molar ratio of the total of silicon-bonded hydrogen atoms in components (B) and (D) to the total of silicon-bonded alkenyl groups in the composition is too high, it may sometimes assist in the adhesion of cured resin to substrates or the like, but the cured resin tends to become brittle. If the molar ratio is too low, the cured resin loses heat resistance and discolors.

In the event a component having silicon-bonded hydrogen atoms is present in addition to component (B), a proportion of silicon-bonded hydrogen atoms derived from component (B) relative to silicon-bonded hydrogen atoms in all components having silicon-bonded hydrogen atoms, specifically the total of silicon-bonded hydrogen atoms available from components (B) and (D) is preferably at least 60 mol%, and more preferably at least 70 mol%. The upper limit of this proportion is not critical although it may be usually up to 100 mol%, preferably up to 99 mol%, and more preferably up to 95 mol%. When the molar ratio of components (B) and (D) is too high or too low, the cured product may have insufficient strength and become brittle.

As component (B), the relevant compounds may be used alone or in admixture.

### Component C

Component (C) is an addition reaction catalyst. It may be any of catalysts known to promote hydrosilylation reaction, typically platinum group metal catalysts including platinum, rhodium and palladium compounds. Most often, chloroplatinic acid and modified products thereof are used. Particularly in the electronic application, low chlorine catalysts are preferred, for example, platinum compound catalysts modified with divinyltetramethyldisiloxane or divinyldiphenyldimethyldisiloxane from which chlorine value has been removed. The catalyst may be added in an effective or catalytic amount. The amount of the catalyst which is preferred in view of material cost is generally up to 500 ppm, preferably up to 200 ppm of platinum group metal based on the weight of component (A) though not limited thereto. The catalyst is preferably added in such an amount as to give at least 2 ppm of platinum group metal because the composition is more susceptible to cure retardation as the addition amount becomes smaller.

### Component D

Epoxy and/or alkoxy group-containing organohydrogenpolysiloxanes and epoxy and/or alkoxy group-containing organosilanes are used as component (D) for preventing changes with time of the composition or for imparting hydrophilic property to the composition or cured product thereof.

For improving the hydrophilic property of the composition or cured product thereof, component (A) is prepared through hydrolysis of organosilanes and subsequent (poly)condensation under acidic or neutral conditions. That is, condensation under alkaline conditions should be avoided. Then, a certain amount of hydrolyzable chlorine or chlorine compounds is left in the resulting component (A). Epoxy groups act to trap chlorine of such chlorine compounds, inhibiting the detrimental effect of residual chlorine (specifically, a viscosity buildup with time or corrosive attack to metals of the composition). A satisfactory effect is exerted when the amount of epoxy groups is equimolar to the amount of residual chlorine, and more preferably, the amount of epoxy groups is about 2 times the moles of residual chlorine. Epoxy group-containing organohydrogenpolysiloxanes are also used as an agent (tackifier) for imparting adhesion to substrates or the like, that is, impart self-adhesion to the inventive composition. Accordingly, compositions comprising epoxy group-containing organohydrogenpolysiloxanes are useful, for example, as LED encapsulants or transparent adhesives.

For inhibiting the influence of residual chlorine, it is also effective to add an alkaline component. A typical example is triallyl isocyanurate. The alkaline component prevents a viscosity buildup with time of the composition when it is added in an amount of about 2 times the moles of residual chlorine. It is noted that the amount of alkaline component added becomes large, depending on the amount of residual chlorine, which sometimes results in formation of hydrochloride.

Component (D) is one or more compounds selected from epoxy and/or alkoxy group-containing organohydrogenpolysiloxanes, epoxy and/or alkoxy group-containing organosilanes, and non-siliceous epoxy compounds.

The organohydrogenpolysiloxane (D) has at least one silicon-bonded hydrogen atom (i.e., SiH group), specifically 1 to 20 SiH groups, and more specifically 2 to 10 SiH groups, and an organic group containing a silicon-bonded alkoxy group and/or a silicon-bonded epoxy group. The preferred organohydrogenpolysiloxane has a linear or cyclic siloxane structure of 2 to about 30 silicon atoms, preferably 4 to about 20 silicon atoms.

Suitable alkoxy groups are those of 1 to 4 carbon atoms including methoxy, ethoxy, propoxy, isopropoxy, butoxy, sec-butoxy, and tert-butoxy. The alkoxy group may be bonded to a silicon atom that constitutes a siloxane structure (Si-O-Si) or may be bonded to a siloxane structure-forming silicon atom through an alkylene group of 1 to 6 carbon atoms, especially 2 to 4 carbon atoms, to form an alkoxysilyl group. The epoxy-containing organic group is a group in which an epoxy group is bonded to a silicon atom through a hydrocarbon group, especially an alkylene group of 1 to 6 carbon atoms (which may be separated by an ether-forming oxygen atom), examples of which are shown below.

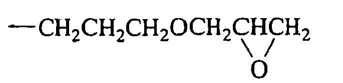

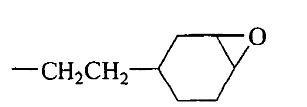

Groups bonded to silicon atoms other than the SiH, epoxy and alkoxy groups include monovalent hydrocarbon groups of 1 to 12 carbon atoms, especially 1 to 8 carbon atoms, such as alkyl, aryl and aralkyl groups.

Illustrative examples of the organohydrogenpolysiloxane (D) are shown below. Me stands for methyl.

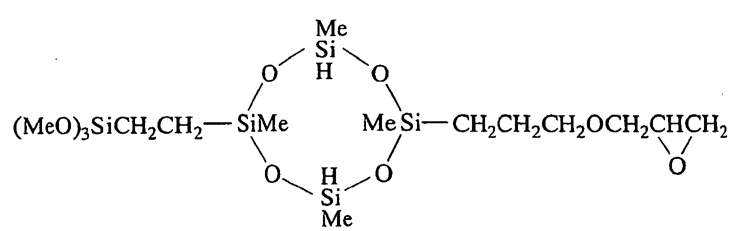

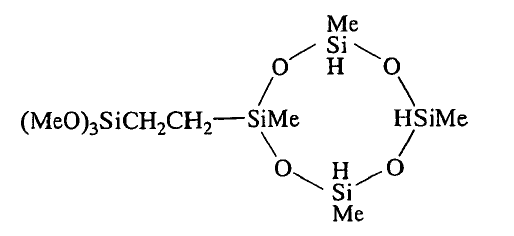

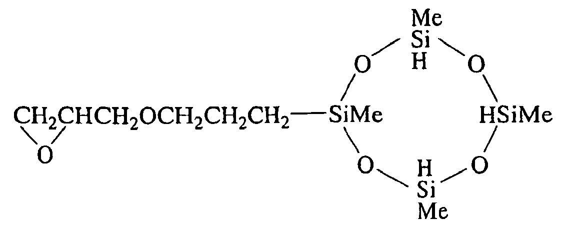

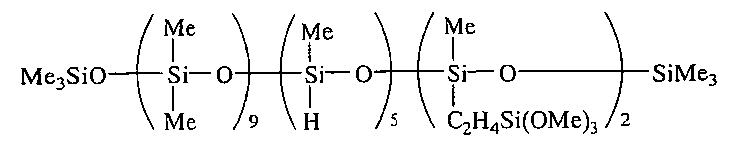

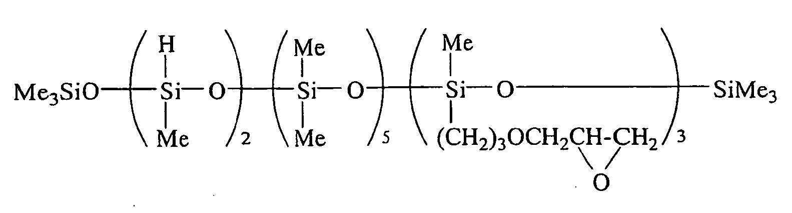

Also useful as component (D) are epoxy and/or alkoxy group-containing organosilanes, for example, epoxy-containing organoalkoxysilanes such as glycidoxyalkyltrialkoxysilanes, glycidoxyalkyldialkoxyorganosilanes, and 3,4-epoxycyclohexylalkyltrialkoxysilanes, alkenyl-containing alkoxysilanes such as alkenyltrialkoxysilanes and alkenyldialkoxyorganosilanes, alkyl-containing alkoxysilanes such as alkyltrialkoxysilanes and alkyldialkoxyorganosilanes, aryl-containing alkoxysilanes such as aryltrialkoxysilanes and aryldialkoxyorganosilanes; and non-siliceous epoxy compounds, for example, hydrocarbon series epoxy compounds free of silicon atoms in the molecule such as allyl glycidyl ether, bisphenol F diglycidyl ether, and bisphenol A diglycidyl ether. The epoxy and alkoxy groups used herein are as described above. Groups bonded to silicon atoms other than the epoxy and alkoxy groups include monovalent hydrocarbon groups of 1 to 12 carbon atoms, especially 1 to 8 carbon atoms, such as alkyl, aryl, aralkyl and alkenyl groups. Illustrative examples of these organosilanes and non-siliceous epoxy compounds are shown below.

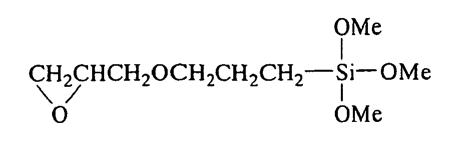

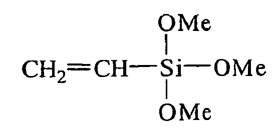

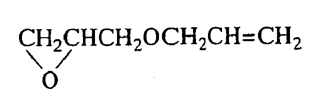

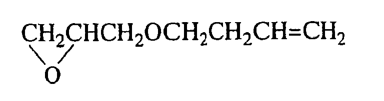

Component (D) is preferably compounded in an amount of 0.01 to 30 parts by weight, more preferably 3 to 15 parts by weight per 100 parts by weight of components (A) and (B) combined.

In order that a cured product obtained by heat curing of the silicone composition of the invention have the desired transparency, component (A) should be fully compatible with component (B). It is preferred that a difference in refractive index between components (A) and (B) be equal to or less than 0.1. A cured product obtained by heat curing of such a silicone composition is highly transparent as demonstrated by a transmittance of at least 85% for light with wavelength 450 nm. When the cured product is allowed to stand in a 85°C/85% RH atmosphere for 100 hours and then restored to room temperature, it does not turn white turbid in outer appearance and maintains a transmittance of wavelength 450-nm light equal to or greater than 85%, especially equal to or greater than 90% of the initial transmittance. In the conventional silicone compositions, a white turbid phenomenon would occur in a hot humid atmosphere. Some cured products of the conventional silicone compositions would turn white turbid only after 8 hour standing. After 100 hours, the white turbidity and light transmittance of the cured products in which the white turbid phenomenon already had occurred are kept substantially unchanged even if the cured products are heated to about 100°C.

In addition to components (A) to (D) described above, the inventive composition may further comprise additional components if necessary. For example, an addition reaction regulator or an addition reaction retarder containing a straight or cyclic alkenyl group may be added for controlling cure to provide for a pot life as long as they do not compromise the objects of the invention.

Also inorganic fillers such as fumed silica may be compounded for enhancing strength as long as they do not adversely affect transparency. Furthermore, wavelength regulators, dyes, pigments, flame retardants, heat resistance improvers, antioxidants or the like may be added if necessary.

Using the heat curable silicone composition of the invention, any desired part can be molded. The molding method is not particularly limited. Among others, cast molding is preferred and can be performed under standard molding conditions. Injection molding using a heated mold is also possible, for which the composition is preferably adjusted to a viscosity of about 1.0 to 100 Pa-s.

With respect to the curing conditions for cast molding, the inventive composition is subjected to primary curing at 100 to 120°C for 10 minutes to 1 hour and secondary curing (post-curing) at 120 to 150°C for 30 minutes to 4 hours.

The heat curable silicone composition of the invention cures into a transparent product having a high hardness and high strength. Then the composition is used as optical materials including encapsulants, lenses and the like. From the standpoint of "anti-flaw" or preventing dust deposition due to tack, the composition cures at 150°C for one hour into a product which should preferably have a hardness equal to or greater than 60 in Shore D Durometer unit. With respect to the durable reliability needed when the composition is used in electric appliances or the like, the cured product should preferably have heat resistance at 130 to 150°C and not turn white turbid after standing for a time in a 85°C/85% RH atmosphere. Such physical properties can be achieved by a proper choice of the type and amount of components (A), (B) and (D).

### EXAMPLE

Examples of the invention are given below by way of illustration and not by way of limitation. For component (A), the hydroxyl content is measured according to JIS K1557. For the cured product, the hardness in Shore D is measured according to JIS K7060 using a Barcol hardness tester, and the light transmittance is measured on a 2-mm thick sample using a spectrophotometer U-3310 (Hitachi, Ltd.). H/Vi refers to a molar ratio of total SiH groups to total silicon-bonded vinyl groups.

### Example 1

The charge for component (A) had the composition (C₆H₅) _{0.62}(CH₂=CH)_{0.38}(CH₃)_{0.38}SiO_{1.31}. Specifically, with stirring, a mixture of 45.8 g vinylmethyldichlorosilane and 111.0 g phenyltrichlorosilane (molar ratio 38:62) in 20 g toluene was slowly added dropwise to a mixture of 120 g toluene and 320 g water in a flask for co-hydrolysis so that the temperature within the flask might not exceed 50°C. This was followed by polycondensation below 70°C for 2 hours. There was prepared a toluene solution of an organopolysiloxane of three-dimensional network (resinous) structure having a nonvolatile content of 70% on heating at 150°C for 30 minutes and a hydroxyl content of 3.0% by weight based on the organopolysiloxane (resin solids' vinyl value: 0.335 mol/100 g). This organopolysiloxane solution was stripped at 80°C and 2 kPa (15 mmHg) for one hour. To 100 parts by weight of the organopolysiloxane, 43 parts by weight of a methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) and 10 parts by weight of a hydrogensiloxane having alkoxy (methoxy) groups represented by the structural formula A shown below were added, yielding a clear liquid (H/Vi = 0.97). To this liquid, a platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 75.

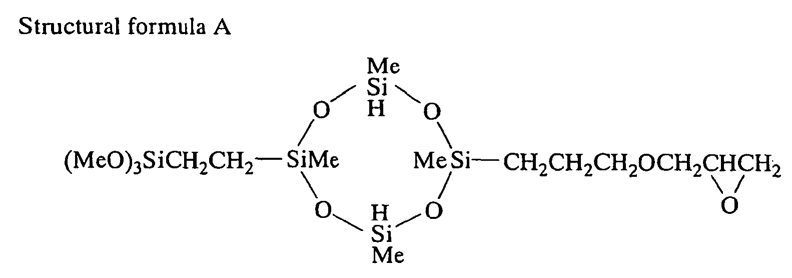

### Comparative Example 1

The charge for component (A) had the composition (C₆H₅)_{0.62}(CH₂=CH)_{0.38}(CH₃)_{0.76}SiO_{1.12}. Specifically, a mixture of vinyldimethylchlorosilane and phenyltrichlorosilane (molar ratio 32.5:52.5) was added dropwise to a toluene/water mixture for co-hydrolysis so that the system temperature might be kept below 50°C. This was followed by polycondensation below 70°C for 2 hours. To 100 parts by weight of the organopolysiloxane was added 0.04 part by weight of a 50% KOH aqueous solution. Condensation was continued for 5 hours by heating under reflux at 110°C, preparing a toluene solution of an organopolysiloxane of three-dimensional network structure having a nonvolatile content of 70% on heating at 150°C for 30 minutes and a nil hydroxyl content (0% by weight based on the organopolysiloxane) (resin solids' vinyl value: 0.335 mol/100 g). This organopolysiloxane solution was stripped at 80°C and 2 kPa (15 mmHg) for one hour. To 100 parts by weight of the resin, 70 parts by weight of the methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) and 10 parts by weight of the hydrogensiloxane having alkoxy (methoxy) groups represented by the structural formula A shown above were added, yielding a clear liquid (H/Vi = 0.97). To this liquid, the platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 76.

### Comparative Example 2

The charge for component (A) had the composition (C₆H₅)_{0.62}(CH₂=CH)_{0.38}(CH₃)_{0.38}SiO_{1.31}. Specifically , a mixture of vinylmethyldichlorosilane and phenyltrichlorosilane (molar ratio 38:62) was added dropwise to a toluene/water mixture for co-hydrolysis so that the system temperature might be kept below 50°C. This was followed by polycondensation below 70°C for 2 hours. There was prepared a toluene solution of an organopolysiloxane of three-dimensional network (resinous) structure having a nonvolatile content of 70% on heating at 150°C for 30 minutes and a hydroxyl content of 3.0% by weight based on the organopolysiloxane (resin solids' vinyl value: 0.335 mol/100 g). This organopolysiloxane solution was stripped at 80°C and 2 kPa (15 mmHg) for one hour. To 100 parts by weight of the organopolysiloxane, 43 parts by weight of the methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) was added, yielding a clear liquid (H/Vi = ∼0.78). To this liquid, the platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 75.

In Example 1 and Comparative Examples 1 and 2, the resins were measured for transmittance of 450-nm light both as cured and after they were allowed to stand at 85°C and 85% RH for 100 hours. The results are shown in Table 1.

**Table 1**

| | Example | Comparative Example | |
|---|---|---|---|
| | 1 | 1 | 2 |
| Initial transmittance (%) @450 nm | 90.6 | 89.0 | 89.4 |
| Transmittance (%) @450 nm after 85°C/85% RH/100 hr standing | 87.4 | 30.5 | 74.5 |
| Retentivity (%) relative to initial | 96.5 | 34.3 | 83.3 |
| Discoloration at 130°C | no | no | no |

It is seen from Table 1 that as compared with Comparative Examples 1 and 2, Example 1 experienced only a slight decline of 450-nm light transmittance after 85°C/85% RH/100 hr standing. The retentivity of light transmittance relative to the initial is high, that is, more than 90% relative to the initial.

### Comparative Example 3

The charge for component (A) had the composition (C₆H₅)_{0.45}(CH₂=CH)_{0.40}(CH₃)_{0.70}SiO_{1.23}. Specifically, a mixture of vinylmethyldichlorosilane, phenyltrichlorosilane and dimethyldichlorosilane (molar ratio 40:45:15) was added dropwise to a toluene/water mixture for co-hydrolysis so that the system temperature might be kept below 50°C. This was followed by polycondensation below 70°C for 2 hours. There was prepared a toluene solution of an organopolysiloxane of three-dimensional network structure having a nonvolatile content of 70% on heating at 150°C for 30 minutes and a hydroxyl content of 3.4% by weight based on the organopolysiloxane (resin solids' vinyl value: 0.403 mol/100 g). This organopolysiloxane solution was stripped at 80°C and 2 kPa (15 mmHg) for one hour. To 100 parts by weight of the organopolysiloxane, 43 parts by weight of the methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) and 10 parts by weight of the hydrogensiloxane having alkoxy (methoxy) groups represented by the structural formula A shown above were added, yielding a clear liquid (H/Vi = 0.81). To this liquid, the platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 76.

### Comparative Example 4

The charge for component (A) had the composition (C₆H₅)_{0.75}(CH₂=CH)_{0.40}(CH₃)_{0.40}SiO_{1.23}. Specifically, a mixture of vinylmethyldichlorosilane, phenyltrichlorosilane and diphenyldichlorosilane (molar ratio 40:45:15) was added dropwise to a toluene/water mixture for co-hydrolysis so that the system temperature might be kept below 50°C. This was followed by polycondensation below 70°C for 2 hours. There was prepared a toluene solution of an organopolysiloxane of three-dimensional network structure having a nonvolatile content of 70% on heating at 150°C for 30 minutes and a hydroxyl content of 3.4% by weight based on the organopolysiloxane (resin solids' vinyl value:0.371 mol/100 g). This organopolysiloxane solution was stripped at 80°C and 2 kPa (15 mmHg) for one hour. To 100 parts by weight of the organopolysiloxane, 43 parts by weight of the methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) and 10 parts by weight of the hydrogensiloxane having alkoxy (methoxy) groups represented by the structural formula A shown above were added, yielding a clear liquid (H/Vi = 1.02). To this liquid, the platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 76.

### Comparative Example 5

The charge for component (A) had the composition (C₆H₅)_{0.61}(CH₂=CH)_{0.44}(CH₃)_{0.44}SiO_{1.26}. Specifically, a mixture of vinylmethyldichlorosilane, phenyltrichlorosilane and diphenyldichlorosilane (molar ratio 40:45:15) was added dropwise to a toluene/water mixture for co-hydrolysis so that the system temperature might be kept below 50°C. This was followed by polycondensation below 70°C for 2 hours. There was prepared a toluene solution of an organopolysiloxane of three-dimensional network structure having a nonvolatile content of 70% on heating at 150°C for 30 minutes and a hydroxyl content of 3.3% by weight based on the organopolysiloxane (resin solids' vinyl value: 0.380 mol/100 g). This organopolysiloxane solution was stripped at 80°C and 2 kPa (15 mmHg) for one hour. To 100 parts by weight of the organopolysiloxane, 43 parts by weight of the methylhydrogenpolysiloxane crosslinker having 15 mol% of phenyl groups relative to silicon atoms in the molecule, a hydrogen gas generation amount of 137 ml/g, and a viscosity of 2×10⁻⁶ m²/s (2 centistokes) and 10 parts by weight of the hydrogensiloxane having alkoxy (methoxy) groups represented by the structural formula A shown above were added, yielding a clear liquid (H/Vi = 0.86). To this liquid, the platinum catalyst having divinyltetramethyldisiloxane as a ligand was added in an amount to give 10 ppm of platinum atoms. The resulting composition was uniformly mixed and then cured by heating at 100°C for one hour and further at 150°C for one hour, yielding a colorless transparent resin having a Shore D hardness of 77.

In Comparative Examples 3 to 5, the resins were measured for transmittance of 450-nm light both as cured and after they were allowed to stand at 85°C and 85% RH for 100 hours. The results are shown in Table 2.

**Table 2**

| | Comparative Example | | |
|---|---|---|---|
| | 3 | 4 | 5 |
| Initial transmittance (%) @450 nm | 84.8 | 89.4 | 88.5 |
| Transmittance (%) @450 nm after 85°C/85% RH/100 hr standing | 42.1 | 45.5 | 65.5 |
| Retentivity (%) relative to initial | 49.6 | 50.9 | 74.0 |
| Discoloration at 130°C | no | no | no |

## Claims

1. A heat curable silicone composition comprising
(A) an organopolysiloxane containing 0.5 to 10% by weight of hydroxyl groups, represented by the average compositional formula (1):
R¹ₙ(C₆H₅)ₘSiO_{(4-n-m)/2} (1)
wherein R¹ is each independently a substituted or unsubstituted monovalent hydrocarbon group (excluding phenyl), alkoxy group or hydroxyl group, 30 to 90 mol% of entire R¹ being alkenyl groups, n and m are positive numbers in the range: 1 s n+m < 2 and 0.20 ≤ m/(n+m) s 0.95,
(B) an organohydrogenpolysiloxane containing at least two silicon-bonded hydrogen atoms per molecule, represented by the average compositional formula (2):
R²ₐH_{b}SiO_{(4-a-b)/2} (2)
wherein R² is each independently a substituted (excluding epoxy and alkoxy substitution) or unsubstituted monovalent hydrocarbon group free of aliphatic unsaturation, and "a" and "b" are positive numbers in the range: 0.7 ≤ a s 2.1, 0.01 s b ≤ 1.0, and 0.8 ≤ a+b s 3.0, in such an amount that a molar ratio of the total of silicon-bonded hydrogen atoms in components (B) and (D) to the total of silicon-bonded alkenyl groups in the composition is between 0.5 and 4.0,
(C) a catalytic amount of an addition reaction catalyst, and
(D) 0.01 to 30 parts by weight per 100 parts by weight of components (A) and (B) combined of at least one compound selected from epoxy and/or alkoxy group-containing organohydrogenpolysiloxanes, epoxy and/or alkoxy group-containing organosilanes, and non-siliceous epoxy compounds.

2. The composition of claim 1, wherein component (A) is obtained through hydrolytic condensation of at least one silane compound having a hydrolyzable group and contains D units of the formula: R³₂SiO_{2/2} wherein R³ is a substituted or unsubstituted monovalent hydrocarbon group, and in some or all D units, at least one of the two R³ is an alkenyl group.

3. The composition of claim 1 or 2, which cures at 150°C for 1 hour into a product having a hardness of at least 60 in Shore D Durometer unit.

4. The composition of any one of claims 1 to 3, which in the cured state has a transmittance of at least 85% for 450 nm linear light.

5. The composition of any one of claims 1 to 4, wherein after a cured product thereof is held for a time in a 85°C/85% RH atmosphere, the cured product has an outer appearance free of white turbidity and keeps a transmittance of 450 nm linear light at a level equal to or greater than 90% of the initial.

6. The composition of any one of claims 1 to 5, which is used as light emitting diode encapsulants or optical lenses.

## Patentansprüche

1. Wärmehärtbare Siliconzusammensetzung, umfassend
(A) ein Organopolysiloxan, enthaltend 0,5 bis 10 Gew.-% Hydroxylgruppen, wiedergegeben durch die durchschnittliche Zusammensetzungsformel (1):
R¹ₙ(C₆H₅)ₘSiO_{(4-n-m)/2} (1)
worin R¹ jeweils unabhängig eine substituierte oder unsubstituierte, einwertige Kohlenwasserstoffgruppe (ausschließlich Phenyl), Alkoxygruppe oder Hydroxylgruppe ist, wobei 30 bis 90 Mol% des gesamten R¹ Alkenylgruppen sind, n und m positive Zahlen sind in dem Bereich: 1 ≤ n+m < 2 und 0,20 ≤ m/(n+m) ≤ 0,95,
(B) ein Organowasserstoffpolysiloxan, enthaltend mindestens zwei Siliciumgebundene Wasserstoffatome pro Molekül, wiedergegeben durch die durchschnittliche Zusammensetzungsformel (2):
R²ₐH_{b}SiO_{(4-a-b)/2} (2)
worin R² jeweils unabhängig eine substituierte (ausschließlich Epoxy- und Alkoxy-Substitution) oder unsubstituierte, einwertige Kohlenwasserstoffgruppe ist, welche keine aliphatische Ungesättigtheit aufweist, und "a" und "b" positive Zahlen sind in dem Bereich: 0,7 ≤ a ≤ 2,1, 0,01 ≤ b ≤ 1,0 und 0,8 ≤ a+b ≤ 3,0, in einer solchen Menge, dass das Molverhältnis der Gesamtheit der Silicium-gebundenen Wasserstoffatome in den Komponenten (B) und (D) zur Gesamtheit der Silicium-gebundenen Alkenylgruppen in der Zusammensetzung zwischen 0,5 und 4,0 liegt,
(C) eine katalytische Menge eines Additionsreaktionskatalysators, und
(D) 0,01 bis 30 Gewichtsteile pro 100 Gewichtsteile der kombinierten Komponenten (A) und (B) mindestens einer Verbindung, gewählt aus Epoxy- und/oder Alkoxygruppen enthaltenden Organowasserstoffpolysiloxanen, Epoxy- und/oder Alkoxygruppen enthaltenden Organosilanen und nicht siliciumhaltigen Epoxyverbindungen.

2. Zusammensetzung nach Anspruch 1, wobei Komponente (A) erhalten wird durch hydrolytische Kondensation mindestens einer Silanverbindung, welche eine hydrolysierbare Gruppe hat und D-Einheiten der Formel: R³₂SiO_{2/2} enthält, worin R³ eine substituierte oder unsubstituierte, einwertige Kohlenwasserstoffgruppe ist, und in einigen oder allen D-Einheiten mindestens eines der zwei R³ eine Alkenylgruppe ist.

3. Zusammensetzung nach Anspruch 1 oder 2, welche bei 150°C während 1 Stunde zu einem Produkt härtet, das eine Härte von mindestens 60 in der Shore D Durometer-Einheit aufweist.

4. Zusammensetzung nach mindestens einem der Ansprüche 1 bis 3, die im gehärteten Zustand für lineares Licht von 450 nm eine Durchlässigkeit von mindestens 85% aufweist.

5. Zusammensetzung nach mindestens einem der Ansprüche 1 bis 4, wobei, nachdem ein gehärtetes Produkt daraus eine Zeit lang in einer 85°C/85% RH-Atmosphäre gehalten wird, das gehärtete Produkt eine äußere Erscheinung aufweist, welche frei ist an Weißtrübung und die Durchlässigkeit für lineares Licht von 450 nm auf einem Niveau hält, das gleich oder größer als 90% des Ausgangswertes ist.

6. Zusammensetzung nach mindestens einem der Ansprüche 1 bis 5, welche als Einkapselungsmaterialien für lichtemittierende Dioden oder als optische Linsen verwendet wird.

## Revendications

1. Composition thermodurcissable à base de silicone, comprenant :
(A) un organopolysiloxane contenant de 0,5 à 10 % en poids de groupes hydroxy, représenté par la formule brute moyenne (1) :
R¹ₙ(C₆H₅)ₘSiO_{(4-n-m)/2} (1)
dans laquelle les groupes R¹ représentent indépendamment chacun un groupe hydrocarboné monovalent substitué ou non substitué (à l'exclusion d'un groupe phényle), un groupe alkoxy ou un groupe hydroxy, de 30 à 90 moles % de la totalité des groupes R¹ étant des groupes alcényle, n et m étant des nombres positifs dans la plage de 1 ≤ n+m < 2 et 0,20 ≤ m/(n+m) ≤ 0,95,
(B) un organohydrogénopolysiloxane contenant au moins deux atomes d'hydrogène liés au silicium par molécule, représenté par la formule brute moyenne (2) :
R²ₐH_{b}SiO_{(4-a-b)/2} (2)
dans laquelle les groupes R² représentent indépendamment chacun un groupe hydrocarboné monovalent substitué (à l'exclusion d'une substitution avec un groupe époxy et un groupe alkoxy) ou non substitué, sans insaturation aliphatique, et "a" et "b" sont des nombres positifs dans la plage de 0,7 ≤ a ≤ 2,1, 0,01 ≤ b ≤ 1,0 et 0,8 ≤ a+b ≤ 3,0, en une quantité telle que le rapport molaire de la totalité des atomes d'hydrogène liés au silicium dans des composants (B) et (D) à la totalité des groupes alcényle liés au silicium dans la composition soit de 0,5 à 4,0,
(C) une quantité catalytique d'un catalyseur de réaction d'addition, et
(D) de 0,01 à 30 parties en poids pour 100 parties en poids des composants (A) et (B) combinés, d'au moins un composé choisi parmi les organohydrogénopolysiloxanes à groupes époxy et/ou alkoxy, les organosilanes à groupes époxy et/ou alkoxy, et les composés à groupe époxy sans silicium.

2. La composition de la revendication 1, dans laquelle le composant (A) est obtenu par condensation hydrolytique d'au moins un composé de type silane comportant un groupe hydrolysable, et contenant des motifs D correspondant la formule R³₂SiO_{2/2} dans laquelle R³ est un groupe hydrocarboné monovalent substitué ou non substitué, et dans certains ou la totalité des motifs D, au moins un des deux groupes R³ est un groupe alcényle.

3. La composition de la revendication 1 ou 2, qui durcit à 150 °C en une heure en un produit ayant une dureté d'au moins 60 en unités de duromètre Shore D.

4. La composition de l'une quelconque des revendications 1 à 3, qui, à l'état durci, a une transmittance d'au moins 85 % pour de la lumière linéaire de 450 nm.

5. La composition de l'une quelconque des revendications 1 à 4, dans laquelle, après qu'un produit durci de celle-ci ait été maintenu pendant une période dans une atmosphère à 85 °C et une humidité relative de 85 %, le produit durci à un aspect extérieur sans turbidité blanche et conserve une transmittance de lumière linéaire de 450 nm à un niveau égal ou supérieur à 90 % de la valeur initiale.

6. La composition de l'une quelconque des revendications 1 à 5, qui est employée comme matériaux d'encapsulation de diodes luminescentes ou lentilles optiques.
